# EUROPÄISCHE PATENTSCHRIFT

(11) **EP 0 376 221 B1**
(45) Veröffentlichungstag und Bekanntmachung des Hinweises auf die Patenterteilung: **18.11.1993**
(21) Anmeldenummer: 89123851.1
(22) Anmeldetag: 22.12.1989
(51) Int. Cl.: A61C 13/265

(54) **Zahntechnisch-prothetischer Geschiebeanker, insbesondere Teleskop- oder Konuskrone, und Aufgussverfahren zu seiner Herstellung**
Sliding element for anchoring dental prostheses, in particular for telescopic or conical crowns, and method of making same by moulding
Verrou à glissière pour prothèses dentaires, en particulier pour couronnes téléscopiques ou coniques, et méthode de fabrication par moulage

(30) Priorität: 28.12.1988 DE 3844151; 14.02.1989 DE 3904430
(43) Veröffentlichungstag der Anmeldung: 04.07.1990
(73) Patentinhaber: Wall, Giselher, Dr., D-97688 Bad Kissingen (DE)
(72) Erfinder: Wall, Giselher, Dr., D-97688 Bad Kissingen (DE)
(74) Vertreter: KUHNEN, WACKER & PARTNER

(56) Entgegenhaltungen:
- EP-A- 0 110 193
- DE-A- 3 343 461
- DE-A- 3 622 511
- DE-A- 3 623 276

## Beschreibung

Die Erfindung betrifft ein Verfahren zur Herstellung eines zahntechnisch-prothetischen Geschiebeankers, insbesondere einer Teleskop- oder Konuskrone, aus einer goldfreien Legierung mittels der Aufgußtechnik. Die Erfindung betrifft weiterhin einen zahntechnisch-prothetischen Geschiebeanker aus einer goldfreien Legierung.

Zur Verankerung herausnehmbaren partiellen Zahnersatzes im Munde werden neben Klammern, Druckknopfmechanismen, o. ä. besondere Attachments, die sogenannten Geschiebeanker, eingesetzt. Ein solcher Geschiebeanker ist allgemein aus zwei reversibel ineinander greifenden Teilen aufgebaut, von denen das Primärteil in die Ersatzkrone des Ankerzahnes, das Sekundärteil in die herausnehmbare Zahnersatzkonstruktion integriert ist.

Um den nötigen Kraftschluß zu gewährleisten, der den Zahnersatz trägt, müssen Primär- und Sekundärteil mit großer Präzision reibend aufeinander laufen (friktives Prinzip bei parallelwandiger Konstruktion) bzw. aufeinander stationär halten (Haftprinzip bei konischer Wandung). Dabei müssen konstruktiv bedingte Toträume aus hygienischen Gründen möglichst klein gehalten werden.

Nachteile der indirekten Gußmethode werden nach dem Stand der Technik durch die Aufgußtechnik, eine direkte Methode zur Herstellung des Sekundärteils vermieden.

Bei der Aufgußtechnik wird die Primärstruktur des Geschiebes selbst in die Gußform für das Sekundärteil eingebettet, so daß der Guß des Sekundärteils direkt auf die Oberfläche des Primärteils erfolgt. Damit Primär- und Sekundärteil trennbar bleiben, muß die Primärstruktur gegen das flüssige Metall des Sekundärgußes ausreichend isoliert werden. Folgende Wege werden beschritten, um bei der Aufgußtechnik Primär- und Sekundärteil trennbar zu erhalten:
- es wird eine Primärlegierung gewählt, deren Arbeitstemperatur wesentlich höher liegt als die Arbeitstemperatur der Sekundärlegierung. Z. B. wird für das Primärteil eine Kobaltbasislegierung und für das Sekundärteil Gold gewählt. Diese Methode bringt jedoch die Problematik der Korrosion, insbesondere eine Verstärkung der Spaltkorrosin durch Sauerstoffgradienten mit sich und sollt daher aus biologischen Gründen nicht angewendet werden.
- es werden oxidische Trennschichten auf der Oberfläche des Primärteils gebildet.

Dies kann nach verschiedenen Verfahren erfolgen:
1. Nach längerem Glühen des Primärteils wird eine autogene Oxidschicht erzeugt (vgl. I. Lenz, Die Quintessenz der Zahntechnik, Heft 11/1987, S. 1219-1230). Jedoch verschlechtert das notwendige länger dauernde Glühen in der Nähe der Rekristallisationstemperatur der Primärlegierung die Oberflächengüte. Die auftretenden Rauhigkeiten können Mikroverkeilungen von Primär- und Sekundärteil bewirken. Vor allem wird aber die autogene Oxidhaut häufig von Sekundärmetall durchschlagen, was eine Verklebung der Teile zur Folge hat. Diese Erscheinung tritt besonders bei großen Geschiebeflächen auf, so daß zirkulär umfassende Konstruktionen, z. B. Teleskop- und Konuskrone in der praktischen Routine undurchführbar sind.
2. Die oxidische Trennschicht erfolgt durch Aufbringen einer oxidischen Isoliermasse auf das Primärteil vor der Modellation des Sekundärteils. Jedoch ist die aufgetrocknete Isoliermasse berührungsempfindlich und neigt zum Abplatzen. Weiterhin werden durch Auftragen mittels Pinsel oder Sprühen störende Strukturen hinterlassen. Insbesondere an den Kanten ist ein solcher Auftrag unterschiedlich dick. Weiterhin kann das flüssige Sekundärmetall an rheologisch ungünstigen Stellen die Isoliermasse ablösen und in den Guß verschleppen. Oft resultieren hieraus Verklebungen, insbesondere bei zirkulär umfassenden Geschiebeflächen wie an Konus- und Teleskopkronen. Da **nach** Trennung der Gußteile die Isolierschicht entfernt werden muß, ist der Guß um etwas mehr als den Betrag der Schichtdicke unpräzise. Vor allem Zylinderpassungen sind in ihrer Friktion unzureichend bzw. verlieren diese zugunsten einer unzulässig weiten Spielpassung völlig.
3. Das Primärteil wird aus einer Legierung gefertigt, die aufgrund ihrer Bestandteile, z. B. Titan oder Aluminium, besonders stark oxidiert und beim Guß eine Selbstisolierung besorgt (vgl. J. Lindigkeit, Phillip Journal 9-1985, S. 283-289). Wegen der großen Oxidationsneigung muß jedoch in einer aufwendigen Vakuumgießanlage gearbeitet werden, über die zahntechnische Labors im allgemeinen nicht verfügen. Bei Konus-und Teleskopkronen ist die Isolierwirkung der relativ niedrigen Gehalte an Titan und Aluminium oft unzureichend. Hohe Titangehalte verursachen eine nicht zu beherrschende Reaktionsbereitschaft der Legierung gegenüber der Gußmasse und machen spätere metallische Verbindungen (Löten, Schweißen) problematisch.

Im ersten Teil der Ansprüche 1 und 25 wird ausgegangen von einem Stand der Technik, wie er in obigem Aufsatz von I. Lindigkeit, Phillip Journal 9-1985, S.283-289 beschrieben ist.

Die DE-A-3 622 511 beschreibt ein Verfahren zum Aufgießen eines aus Edelmetall bestehenden Körpers auf einen anderen ebenfalls aus Edelmetall bestehenden Körper, wobei auf den Primärteil vor dem Aufgießen des Sekundärteils eine Trennmittelschicht aus Graphit aufgetragen wird.

Die Qualität einer Geschiebekonstruktion hängt von der Präzision der Fassung der haftenden oder friktionierenden Flächen ab. Bei den bekannten Methoden zur Herstellung von Schiebeankern mit hoher Trennbarkeitsquote kann eine ausreichend temperaturfeste Isolation zwischen Primärgeschiebe und Sekundärgeschiebe nur durch Aufbau einer relativ dicken Trennschicht erreicht werden. Da diese Trennschicht **nach dem Guß** wieder entfernt werden muß, wird die so erzeugte Passung zwingend unpräzise und damit ungeeignet für Einsatzgebiete, bei denen es auf eine präzise Passung an-kommt, wie z.B. beim Parallelgeschiebe des Zylinderteleskops.

Der Erfindung liegt daher die Aufgabe zugrunde, einen zahntechnisch prothetischen Geschiebeanker beliebiger Form aus einer goldfreien Legierung mit präziser Fassung von Primärgeschiebe und Sekundärgeschiebe unter Verwendung laborüblicher Geräte und Materialien zu schaffen. Diese Aufgabe wird bei einem Verfahren der eingangs genannten Gattung durch die Merkmale der Patentansprüche 1 bzw. 25 gelöst.

Bevorzugte Ausführungsformen der Erfindung werden insbesondere in den Patentansprüchen 2 bis 24 genannt.

Im Rahmen der vorliegenden Erfindung werden unter goldfreien Legierungen mundbewährte Metallegierungen verstanden, die kein Gold, jedoch andere Edelmetalle, wie z. B. Palladium und/oder Ruthenium enthalten können. Bevorzugt werden bekannte NEM-Werkstoffe verwendet, insbesondere übliche edelmetallfreie Legierungen, wie z. B. Kobalt- Chrom-Legierungen oder Nickel-Chrom-Legierungen.

Die beiden Teile eines Geschiebeankers werden als Primärteil und Sekundärteil bezeichnet. Dabei ist das Primärteil das zuerst angefertigte Teil, was bei Teleskop-und Konuskronen in der Regel die Patrize darstellt. Das Sekundärteil ist das Teil, das als zweites Teil direkt auf dem Primärteil gegossen wird. Bei Teleskop- und Konuskronen ist das Sekundärteil die Außenkrone, die Matrize. Es gibt jedoch Fälle, insbesondere bei kleineren Geschieben, wo man zuerst mit der Ankerkrone die Matrize gießt. In diesem Fall stellt die Matrize das Primärteil dar. Anschließend wird die Patrize direkt in die Matrize gegossen. In der Beschreibung und den Patentansprüchen der vorliegenden Patentanmeldung wird mit Primärteil (Primärgeschiebe usw.) grundsätzlich das zuerst gegossene Teil bezeichnet, unabhängig davon, ob es als Patrize oder Matrize dient. Mit Sekundärteil (Sekundärgeschiebe usw.) wird das direkt auf das Prim ärteil gegossene Teil bezeichnet, unabhängig davon, ob es als Matrize oder als Patrize dient.

Mit Flußmittel werden, wie üblich, chemische Substanzen bezeichnet, die beim Metallguß die Abscheidung von Nebenprodukten bzw. Abfallstoffen fördern.

Beim erfindungsgemäßen Verfahren wird als eine isolierende Schicht **innerhalb** der Oberfläche des Primärteils selbst aufgebaut. Das hat den Vorteil, daß keine Isolierung mit relevanter Schichtdicke aufgetragen wird. Theoretisch läßt sich der vorteilhafte Effekt, der gemäß der Erfindung zu erzielen ist, wie folgt erklären: die definitiv bearbeitete Oberfläche der Primärstruktur wird mit einem bereits als Legierungsbestandteil vorliegenden Metall oder einem weiteren Metall, nämtlich Titan, Aluminium, Zirkonium, Hafnium, Vanadium, Niob, Tantal, Wolfram und/oder Rhenium oder einem Halbmetall als isolierendem Medium dotiert, welches sich in die Oberfläche integriert. Diese nachträglich eingebrachten Metalleilchen verhalten sich bei der Folgebehandlung wesentlich reaktiver als die in der Legierung ursprünglich vorhandenen Metalle. Es bilden sich in der entstandenen Metalloberfläche verschiedene Oxide bzw. Oxidationsprodukte des eingebrachten Metalls, die eine wirksame Sperrschicht (Diffusionssperre) gegen das Verkleben von Primär- und Sekundärguß bilden.

Bei manchen Legierungen kann man eine isolierende Schicht dadurch aufbauen, daß man im Oberflächenbereich einen geeigneten Bestandteil der Legierung selbst anreichert. Hierfür eignen sich besonders die Metalle Titan, Aluminium, Zirkonium, Molybdän und Chrom sowie Niob, Wolfram und Tantal.

Als Halbmetalle eignen sich insbesondere Bor und Silizium bzw. ihre Verbindungen als Hartstoff, insbesondere Siliziumkarbid SiC.

Die Sperrschicht, die man nach Erhitzen des mit einer Hafnium, Vanadium, Tantal, Wolfram und/oder Rhenium-Isolierung versehenen Primärteils in Graphitpulver erhält und vermutlich diverse karbidische bzw. karbonitridische Metallverbindungen enthält, hat sich als besonders wirkungsvoll erwiesen. Ähnlich wirkungsvoll ist eine Sperrschicht aus einem Nitrid, Borid oder Silizid der genannten Metalle zuzüglich Titan und Zirkon.

Die erfindungsgemäß aufgebrachte Sperrschicht bzw. Sperrzone in dem Oberflächenbereich des Primärgeschiebes kann vorzugsweise nach einem der folgenden drei Verfahren hergestellt werden:
1. die endgültig bearbeitete Primärgeschiebeoberfläche wird angerauht und damit aktiviert. Dies kann z. B. mit feinstem Mikrokorundpulver von nicht mehr als 25 µm Korngröße bei geringem Druck (z. B. bis zu 2 bar) aus einer Entfernung von ca. 5 bis 7 cm so erfolgen, daß es mit bloßen Auge gerade wahrnehmbar ist. Die Rauhtiefe darf unter keinen Umständen so groß sein, wie dies vom Auftrag oxidischer Isolierschichten her geläufig ist.
   Alternativ zum mechanischen Aufrauhen kann man die Aktivierung der Oberfläche durch Oxidation erreichen. Man kann z. B. durch Glühen mit Sauerstoff bzw. Luft bis zum Tiefblau erster Ordnung oxidieren, was einer Oxidschicht von 150 bis 200 nm (Nanometer) entspricht. Die durch Oxidation aktivierte Oberfläche ist manchmal noch reaktiver bei dem folgenden Einbau eines Metalls als die mechanisch aufgerauhte Oberfläche.
   Hierauf erfolgt nach Entfetten mit gespanntem Heißdampf, mechanischer Reinigung im Ultraschallbad (5 Minuten, Aqua dest. von 70°C) und erneutem Abdampfen ein Anstrich mit wäßrigem Metallhydridbrei. Der Auftrag wird nach Trocknen im technischen Vakuum eines laborüblichen Keramikofens bei ca. 900 bis 1100°C während einiger Minuten zersetzt. Der Ofen ist so zu schalten, daß der Unterdruck vor dem Temperaturanstieg aufgebaut ist. Da Sauerstoff und Stickstoff stören, sind diese Restgase zu entfernen. Sauerstoff und Stickstoff können bequem dadurch gebunden werden, daß man in einen laborüblichen Keramikofen Titan-Schnitzel oder ähnliches, z. B. eine dünne Titandrahtspirale oder ein Titandrahtgeflecht als Getter, der vor jeder Verwendung abzustrahlen ist, mit dem zu bearbeitenden Werkstück eingibt. Ferner ist es vorteilhaft, wenn die Atmosphäre wasserstoffhaltig ist, was leicht dadurch erreicht wird, daß man eine Spatels pitze Metallhydridpulver in einem Porzellanschälchen mit in den Keramikofen gibt. Der im Metallhydrid gebundene Wasserstoff wird gerade im Bedarfsmoment freigesetzt, wo auch der Anstrich aus Metallhydridbrei der Primärteile in seine Elemente zerfällt. Das freiwerdende atomare und damit hochaktive Metall lagert sind unter diesen Bedingungen auch unterhalb seiner Schmelztemperatur zu einem kleinen, aber ausreichenden Teil in die vorbereitete Oberfläche geeigneter Legierungen, die ebenfalls durch den freigewordenen Wasserstoff aktiviert worden ist, ein.
   Der überwiegende Teil des Metallhydrids verbrennt beim öffnen der Brennkammer zu Metalloxid bzw. bildet mit autogenen Oxiden diverse Meallverbindungen in Form einer mehr oder weniger fest haftenden rauhen Schicht. Diese zunächst dem Primärguß anhaftende Oxidschicht wird - anders als bei herkömmlichen Methoden - bei dem erfindungsgemäßen Verfahren nach Abkühlen wieder entfernt. Mann kann sie z. B. mit einem Feinstrahlmittel aus Glasperlen vor dem Aufguß restlos abtragen oder die locker haftenden Oxide abreiben, ohne die eigentliche Metalloberfläche zu verletzen.
   In dieser Metalloberfläche haben sich während der Abkühlungsphase bei Luftzutritt diverse Oxidationsprodukte des eingebrachten Metalls gebildet. Die nach Versäubern olivgolden bis schwarz seidenglänzende Oberfläche weist ein beträchtliches und in vielen Fällen ausreichendes Isolationsvermögen gegenüber dem Sekundärguß auf. Dieses kann insbesondere im Hinblick auf die mechanische Belastbarkeit (Härte) noch wesentlich verbessert werden, wenn die Primärteile in Graphitpulver im Graphittiegel eingebettet noch für ca. 10 Minuten (z. B. induktiv bei einer Hochfrequenz-Gußanlage) auf ca. 1000°C erhitzt werden. Die dabei in der Oberfläche gebildeten Karbide bzw. karbidischen Nitride des Metalls und anderer Legierungspartner härten die Oberfläche so, daß nach Abkühlen die Graphitpulverrückstände vor der Weiterbehandlung der Primärteile abgerieben bzw. vorsichtig abgebürstet werden können.
   Diese Härtung des oberflächlich eingebrachten weiteren Metalls bzw. des Legierungsbestandteils kann statt durch Bildung des Metallkarbids oder -karbonitrids auch dadurch erfolgen, daß man oberflächlich das eingebrachte Metall zu Metallsilizid, -nitrid, bzw. -borid umsetzt, sofern eine Oxidbildung des weiteren Metalls allein nicht ausreicht.
   Die Metallsilizid- bzw. Metallborid-Bildung kann z. B. dadurch erfolgen, daß man das Primärteil nach Einbringen des Metalls mit Siliziumpulver oder bei geeigneten Dotierungsmetallen mit Aluminiumboridpulver (Typ: AlB₁₂) bzw. Borpulver z. B. auf 1000 bis 1100°C in Abhängigkeit von der Metallart, vorzugsweise unter vermindertem Druck in H₂ -Atmosphäre erhitzt.
   Man kann statt dessen aber auch beispielsweise auf das Primärteil vor dem Einbringen des Metalls einen wäßrigen Metallhydridbrei, wie oben beschrieben, aufbringen, der mit z. B. 25 Gew.-% pyrogenem Siliziumdioxid oder feinstem Quarzmehl bzw. 10 Gew.-% feinem Siliziumpulver vermischt wurde.
   Weitere Verfahren zur Bildung eines Metallsilicids oder Metallborids in der Oberflächenzone des Primärteils kann der Fachmann aufgrund seiner allgemeinen Kenntnisse ohne weiteres auswählen bzw. der Fachliteratur entnehmen. Anschließend wird auch bei diesem alternativen Härtungs-Verfahren z. B. auf 1000 bis 1100°C, in Abhängigkeit von der Metallart, erhitzt, vorzugsweise in stickstoff- und halogenfreier reduzierender Atmosphäre bei vermindertem Druck.
   Die Nitridierung erfolgt zweckmäßig in Ammoniakatmosphäre bzw. in Stickstoffatmosphäre unter Glimmentladung. Am einfachsten kann das ausgeführt werden, wenn man das Werkstück (Primärteil) im Glasgefäß in der HF-Spule z. B. des Gußgerätes erhitzt. Bekanntlich zeigt sich beim Heizen durch Mikrowelle in Niederdruckatmosphäre am Metallkörper eine Glimmentladung.
   Nach Modellation, Guß und Trennen der Primär- von den Sekundärteilen können Hartstoffschichten mit feinstem Korundpulver aus der Oberfläche schonend entfernt werden, woran sich eine Politur mit Diamantpaste auf Filzrad anschließen kann. Eine Politur ohne vorhergehende Behandlung mit Korund ist auch möglich, jedoch zeitaufwendiger. Der Substanzabtrag ist so gering wie möglich zu halten; die Politur ist auf Seidenglanz zu beschränken, Hochglanz ist in vielen Fällen unnötig und abträglich. Daher sollten Gummipolierer auf den Friktions- und Haftflächen nicht angewandt werden.
2. Das weitere Metall bzw. der Legierungsbestandteil kann evtl. auch durch Reduktion mit einem Metall oder auf aluminothermischem Wege durch Umsetzen von Metalloxid mit der stöchiometrischen Menge von Aluminium bzw. einem anderen geeigneten Metall in Form feinsten Metallpulvers in situ freigesetzt werden. Die Mischung von Metalloxid und Aluminium bzw. Metall wird mit Wasser und vorzugsweise mit Flußmittel, z. B. unter Zusatz von ca. 5 % LiF, angefeuchtet und wie unter 1. beschrieben, aufgetragen. Die Reaktion erfolgt auch hier in zumindest technischem Vakuum des Keramikofens, vorzugsweise unter Zugabe von Titandraht. Eine Wasserstoffatmosphäre ist nicht erforderlich. Nach Reaktionsende werden die Primärteile, wie oben unter 1. beschrieben, weiterbehandelt. Die Reaktionsrückstände haften auf den Primärteilen hier etwas fester als bei der Metallhydridmethode.
   Die Metalloxid-Aluminium-Mischung muß immer frisch zubereitet werden, da sie weder trocken noch feucht aufbewahrt werden kann, und ist nach Gebrauch in einer größeren Wassermenge zu inaktivieren.
3. Eine weitere Alternative zur Erzeugung des weiteren Metalls bzw. des Legierungsbestandteils im Oberflächenbereich des Primärgeschiebes besteht in der CVD-Methode durch thermische Gasphasenzersetzung von Metallhaliden. Hierzu zersetzt man z. B. Titan(IV)jodid, Niob(V)chlorid, Tantal(V)chlorid, Wolfram(VI)chlorid, Vanadium(II)chlorid und Hafnium(IV)chlorid z. B. in einer Niederdruck- Wasserstoffatmosphäre in der HF-Induktionsspule der Schmelzanlage. Die Zersetzungstemperaturen liegen bei Wolfram und Vanadiumhalogeniden bei ca. 700/800°C, bei den anderen bei rund 1000°C. Das sich bildende gasförmige weitere Metall lagert sich oberflächlich in die goldfreie Legierung des Primärgeschiebes ein.
   Zur Herstellung eines Metallborids, -silizids oder -karbids kann man auf einfache Weise den weiteren Reaktanden durch simultanes Zersetzen einer flüchtigen, Bor, Silizium und/oder Kohlenstoff enthaltenden Verbindung herstellen. Geeignete flüchtige Verbindungen sind z. B. Bortrichlorid (BCl₃), Siliziumtetrachlorid (SiCl₄), Tetrachlorkohlenstoff (CCl₄) oder Jodoform (CHJ₃).
   Weitere Möglichkeiten einer geeigneten Bildung des weiteren Metalls aus seinen Verbindungen kann der Fachmann ohne weiteres der Literatur entnehmen.

Bei den vorstehend beschriebenen Verfahren 1 bis 3 wird beim anfänglichen Aktivieren der Oberfläche sowie beim abschließenden Versäubern Oberflächensubstanz abgetragen. Dieser Substanzabtrag ist insbesondere bei oxidativer Aktivierung jedoch wesentlich geringer als bei den bekannten Methoden nach den Stand der Technik und ist grundsätzlich notwendig, um z. B. Zylinderpassungen ein minimales Pflichtspiel zu ermöglichen. Ohne ein solches Spiel könnte die zerlegte Teleskopkrone unter Flüssigkeit gar nicht zusammengeschoben werden, da eingeschlossener Speichel nicht verdrängt werden könnte. Ferner muß einer gewissen Fehlerquote in Rundlauf und Parallelität der laborüblichen Instrumente Rechnung getragen werden. Übersteigen derartige Fehler allerdings die minimale Pflichttoleranz der Konstruktion, so ist die Aufgußkonstruktion mechanisch unlösbar verkeilt.

Werden Primär- und Sekundärteil, wie bisher üblich, aus derselben Legierung hergestellt, so sind beide Partner regelmäßig gewaltsam verkeilt und kaum ohne mechanische Deformation lösbar, wenn es sich um eine Konus- oder Zylinderteleskopkrone handelt. Intrakoronale Geschiebe, bei denen das Sekundärteil als Patrize eingegoßen wird, sind wesentlich einfacher trennbar.

Auch in der beschriebenen Weise aufgegossene Geschiebe aus zwei verschiedenen Legierungen mit unterschiedlichem Wärmeausdehnungskoeffizienten sind oft zunächst schwer trennbar. Aufgrund der unterschiedlichen Wärmeasusdehnungskoeffizienten zwischen dem Primärteil und dem Sekundärteil lassen diese sich leicht lösen, wenn das Geschiebe nach Erhitzen abgeschreckt wird bzw. wenn man unter Kühlung der Innenkrone von innen die Außenkrone aufheizt. Die eingetretene Trennung ist daran zu erkennen, daß bei erneutem gemeinsamen Aufheizen die Trennungslinien der Konstruktion durch unterschiedliche Glühfarben von Primär- und Sekundärteil klar hervortreten. Zur Trennung ist ein pneumatischer Meißel besonders geeignet. Hierbei ist die Meißelspitze abwechselnd beidseitig auf den Gußkegel in Abzugrichtung des Geschiebes aufzusetzen, weshalb die Gußteile erst nach der Trennung von ihrem Kegel abgesägt werden sollen.

Bei einem groben Mißverhältnis der Wandstärken, bzw. Metallmassen beim Aufgießen von Teleskop- und Konuskronen ist es zur Vermeidung eines Wärmestaues in den Primärteilen vorteilhaft, wenn man den feuerfesten Einbettmassestumpf, der dem Zahnstumpf entspricht und den Primärteilen anliegt, thermisch leitend macht. Dies wird im Sinne der Erfindung dadurch erreicht, daß bei Einbetten der isolierten Primärteile zum Aufgießen deren Innenräume mit Einbettmasse ausgegossen werden, die ca. 50 % des Volumens an Chromgranulat enthält.

## Patentansprüche

1. Verfahren zur Herstellung eines zahntechnisch-prothetischen Geschiebeankers, insbesondere einer Teleskop- oder Konuskrone, aus einer goldfreien Legierung mittels Aufgußtechnik, dadurch gekennzeichnet, daß man in den Oberflächenbereich des Primärgeschiebes von außen ein Metall oder ein Halbmetall einbringt, das eine Sperrschicht bzw. Sperrzone aus einem hochtemperaturbeständigen Hartstoff bildet, die die Trennbarkeit des Primärgeschiebes von dem Sekundärgeschiebe nach dessen Guß gewährleistet.

2. Verfahren nach Anspruch 1, dadurch gekennzeichnet, daß das von außen eingebrachte Metall nach chemischer Umsetzung die Sperrschicht bzw. Sperrzone bildet

3. Verfahren nach Anspruch 1, dadurch gekennzeichnet, daß man den Oberflächenbereich des Primärgeschiebes mit einem geeigneten Legierungsbestandteil anreichert.

4. Verfahren nach Anspruch 1, dadurch gekennzeichnet, daß man den Oberflächenbereich des Primärgeschiebes mit einem weiteren Metall versieht.

5. Verfahren nach Anspruch 1, dadurch gekennzeichnet, daß man den Oberflächenbereich mit einer Verbindung eines weiteren Metalls oder Halbmetalls versieht.

6. Verfahren nach einem der Ansprüche 1 bis 5, dadurch gekennzeichnet, daß man den hochtemperaturbeständigen Hartstoff auf der Oberfläche des Primärgeschiebes in situ herstellt.

7. Verfahren nach einem der Ansprüche 1 bis 6, dadurch gekennzeichnet, daß man den hochtemperaturbeständigen Hartstoff durch CVD bzw. Gasphasenzersetzung herstellt.

8. Verfahren nach Patentanspruch 3, dadurch gekennzeichnet, daß man als weiteres Metall Aluminium, Titan, Zirkonium, Hafnium, Vanadium, Niob, Tantal, Chrom, Molybdän, Wolfram und/oder Rhenium einsetzt.

9. Verfahren nach Anspruch 8, dadurch gekennzeichnet, daß man das weitere Metall in Form einer Metallverbindung auf die Oberfläche des Primärgeschiebes aufbringt und daraus in der Wärme das Metall freisetzt.

10. Verfahren nach Anspruch 9, dadurch gekennzeichnet, daß man eine thermisch zersetzbare Metallverbindung aufbringt und anschließend unter Bildung des Metalls thermisch zersetzt.

11. Verfahren nach Anspruch 10, dadurch gekennzeichnet, daß man eine Ti(II)- oder Ti(IV)-Verbindung aufbringt.

12. Verfahren nach Anspruch 11, dadurch gekennzeichnet, daß man ein Titan(IV)-Halogenid thermisch zersetzt und aus der Gasphase Titan in die goldfreie Legierung einbringt.

13. Verfahren nach Anspruch 4, dadurch gekennzeichnet, daß man als Verbindung eines weiteren Metalls oder Halbmetalls ein Oxid, Karbid, Nitrid, Karbonitrid, Silizid oder Borid von Aluminium, Titan, Zirkoniun, Hafnium, Vanadium, Niob, Tantal, Wolfram, Rhenium, Bor und/oder Silizium vorsieht.

14. Verfahren nach Anspruch 13, dadurch gekennzeichnet, daß man als Metallverbindung ein Metalloxid aufbringt, das man in situ aluminothermisch reduziert.

15. Verfahren nach Anspruch 2, dadurch gekennzeichnet, daß man als geeigneten Legierungsbestandteil Molybdän, Chrom, Niob, Wolfram oder Tantal aufbringt.

16. Verfahren nach mindestens einem der Anspruche 2 bis 15, dadurch gekennzeichnet, daß man zusätzlich auf die Oberfläche des Primärgeschiebes Flußmittel aufbringt.

17. Verfahren nach mindestens einem der Patentansprüche 1 bis 16, dadurch gekennzeichnet, daß man das Primärteil mit einer wäßrigen Suspension von Metallhydrid bestreicht und anschließend in einer stickstofffreien reduzierenden Atmosphäre auf 900 bis 1000°C erhitzt.

18. Verfahren nach mindestens einem der Ansprüche 1 bis 17, dadurch gekennzeichnet, daß man zur Herstellung des Silizids das Primärteil mit einer wäßrigen Suspension, die Silizium oder reduzierbares Siliziumoxid neben Metallhydrid enthält, bestreicht und bei 1000 bis 1100°C in stickstoff- und halogenfreier reduzierender Atmosphäre erhitzt:

19. Verfahren nach mindestens einem der Ansprüche 1 bis 17, dadurch gekennzeichnet, daß man zur Herstellung des Silizids das Primärteil nach dem Einbringen des weiteren Metalls einschließlich Titan und/oder Zirkon mit Siliziumpulver bei 1000 bis 1100°C im technischen Vakuum erhitzt.

20. Verfahren nach einem der Patentansprüche 1 bis 17, dadurch gekennzeichnet, daß man zur Nitridbildung das Primärteil, auf dessen Oberflächenbereich ein (weiteres) Metall aufgebracht wurde, in einer Stickstoff- und/oder Ammoniak enthaltenden Niederdruckatmosphäre erhitzt.

21. Verfahren nach einem der Ansprüche 1 bis 14, dadurch gekennzeichnet, daß man das Primärteil nach dem Einbringen von Titan in Graphitpulver erhitzt.

22. Verfahren nach mindestens einem der Ansprüche 1 bis 21, dadurch gekennzeichnet, daß man das Primärgeschiebe oder Sekundärgeschiebe als Patrize aus einer goldfreien Legierung mit einem größeren Ausdehnungskoeffizienten der goldfreien Legierung der Matrize herstellt.

23. Verfahren nach Anspruch 1, dadurch gekennzeichnet, daß man die feuerfeste Einbettmasse für den dem Zahnstumpf entsprechenden Stumpf, der dem Primärgeschiebe anliegt, thermisch leitend macht.

24. Verfahren nach Anspruch 23, dadurch gekennzeichnet, daß man der Einbettmasse bis zu 50 Gew.-% Chrom oder Wolfram in Form eines Granulats zusetzt.

25. Zahntechnisch-prothetischer Geschiebeanker aus einer goldfreien Legierung, gekennzeichnet durch den Gehalt von Titan, Aluminium, Zirkonium, Hafnium, Vanadium, Niob, Tantal, Wolfram und/oder Rhenium der goldfreien Legierung des Primärgeschiebes nur im Oberflächenbereich.

## Claims

1. Method for the manufacture of a dental prosthetic attachment anchor, in particular of a conical or telescope crown, from a gold-free alloy by means of the casting-on method, characterised in that a metal or metalloid is introduced into the surface area of the primary attachment from the outside, said metal or metalloid forming an isolating layer or isolating zone of a high-temperature resistant, hard substance assuring separability of said primary attachment from the secondary attachment after casting.

2. Method according to claim 1, characterised in that said metal introduced from the outside forms the isolating layer, or isolating zone, after chemical conversion.

3. Method according to claim 1, characterised in that the surface area of said primary attachment is enriched with a suitable alloying component.

4. Method according to claim 1, characterised in that the surface area of said primary attachment is provided with one further metal.

5. Method according to claim 1, characterised in that the surface area of said primary attachment is provided with a compound of one further metal or metalloid.

6. Method according to any one of claims 1 through 5, characterised in that said high-temperature resistant, hard substance is produced *in situ* on the surface of said primary attachment.

7. Method according to any one of claims 1 through 6, characterised in that said high-temperature resistant, hard substance is produced by CVD or gaseous phase decomposition.

8. Method according to claim 3, characterised in that aluminum, titanium, zirconium, hafnium, vanadium, niobium, tantalum, chromium, molybdenum, tungsten and/or rhenium are utilized as said further metal.

9. Method according to claim 8, characterised in that said further metal is applied onto the surface of said primary attachment in the form of a metallic compound, and the metal is released therefrom in temperature.

10. Method according to claim 9, characterised in that a thermally decomposable metal compound is applied and subsequently decomposed thermally while forming said metal.

11. Method according to claim 10, characterised in that a Ti(II) or Ti(IV) compound is applied.

12. Method according to claim 11, characterised in that a Ti(IV) halide is thermally decomposed, and titanium is introduced into the gold-free alloy from the gaseous phase.

13. Method according to claim 4, characterised in that an oxide, carbide, nitride, carbonitride, silicide or boride of aluminum, titanium, zirconium, hafnium, vanadium, niobium, tantalum, tungsten, rhenium, boron and/or silicon is provided as a compound of a further metal or metalloid.

14. Method according to claim 13, characterised in that a metal oxide which is reduced aluminothermally *in situ* is applied as said metal compound.

15. Method according to claim 2, characterised in that molybdenum, chromium, niobium, tungsten, or tantalum is applied as said suitable alloying component.

16. Method according to at least one of claims 2 through 15, characterised in that fluxing agent is additionally applied onto the surface of said primary attachment.

17. Method according to at least one of claims 1 through 16, characterised in that an aqueous suspension of metallic hydride is brushed onto said primary part, and said primary part subsequently heated to 900 to 1000°C in reducing atmosphere free of nitrogen.

18. Method according to at least one of claims 1 through 17, characterised in that in order to produce said silicide, said primary part is brushed with an aqueous suspension containing silicon or reducible silicon oxide as well as metal hydride, and heated to 1000 to 1100°C in reducing atmosphere free of nitrogen and halogen.

19. Method according to at least one of claims 1 through 17, characterised in that in order to produce said silicide, said primary part is heated at 1000 to 1100°C with silicon powder in technical vacuum after introduction of said further metal including titanium and/or zirconium.

20. Method according to any one of claims 1 through 17, characterised in that for the purpose of nitride formation said primary part, on the surface area of which a (further) metal was applied, is heated in low-pressure atmosphere containing nitrogen and/or ammonia.

21. Method according to any one of claims 1 through 14, characterised in that said primary part is heated in graphite powder after the introduction of titanium.

22. Method according to at least one of claims 1 through 21, characterised in that said primary attachment or said secondary attachment is produced in the form of a patrix from a gold-free alloy having a higher expansion coefficient than the gold-free alloy of the matrix.

23. Method according to claim 1, characterised in that the refractory mass for embedding the stump corresponding to the tooth stump, which is adjacent to said primary part, is made to be thermally conductive.

24. Method according to claim 23, characterised in that up to 50% by weight of chromium or tungsten in the form of a granulate is added to said embedding mass.

25. Dental prosthetic attachment anchor from a gold-free alloy, characterised by a content of titanium, aluminum, zirconium, hafnium, vanadium, niobium, tantalum, tungsten and/or rhenium of said gold-free alloy of said primary attachment in said surface area exclusively.

## Revendications

1. Procédé de fabrication par surmoulage d'un verrou à glissière pour prothèses dentaires, en particulier d'une couronne télescopique ou conique en un alliage sans or *caractérisé par* l'introduction de l'extérieur, dans la zone de surface de la partie première. d'un métal ou d'un métalloïde qui constitue une couche ou zone isolante en matériau dur résistant à haute température. garantissant la séparabilité de la partie première et de la partie seconde après moulage.

2. Procédé selon la revendication 1 *caractérisé en ce que* le métal introduit de l'extérieur constitue, après transformation chimique, la couche ou zone isolante.

3. Procédé selon la revendication 1 *caractérisé par* l'enrichissement de la zone de surface de la partie première par un composant approprié de l'alliage.

4. Procédé selon la revendication 1 *caractérisé en ce que* la zone de surface de la partie première est pourvue d'un métal supplémentaire.

5. Procédé selon la revendication 1 *caractérisé en ce que* la zone de surface de la partie première est pourvue d'un composé de métal ou de métalloïde.

6. Procédé selon l'une des revendications 1 & 5 *caractérisé en ce que* le matériau dur résistant à haute température est formé *in situ* sur la surface de la partie première.

7. Procédé selon l'une des revendications 1 à 6 *caractérisé en ce que* le matèriau dur résistant à haute température est fabriqué par le procédé CVD ou par décomposition en phase gazeuse.

8. Procédé selon la revendication 3 *caractérisé par* l'utilisation comme métal complémentaire de l'aluminium, du titane, du zirconium, du hafnium, du vanadium, du niobium, du tantale, du chrome, du molybdène, du tungstène et/ou du rhénium.

9. Procédé selon la revendication 8 *caractérisé en ce que* le métal complémentaire est appliqué sur la surface de la partie première par un composé de métal et *que* le métal en est libéré par la chaleur.

10. Procédé selon la revendication 9 *caractérisé par* l'application d'un composé de métal décomposable à la chaleur, qui est ensuite décomposée thermiquement pour former le métal.

11. Procédé selon la revendication 10 *caractérisé par* l'application d'un composé Ti(II) ou Ti (IV).

12. Procédé selon la revendication 11 *caractérisé par* la décomposition thermique d'un halogoïde de titane (VI) et l'introduction, pendant la phase gazeuse, du titane dans l'alliage sans or.

13. Procédé selon la revendication 4 *caractérisé par* l'utilisation comme métal ou métalloïde supplémentaire d'un oxyde, d'un carbure, d'un nitrure, d'un carbonitrure, de siliciures ou d'un borure d'aluminium, de titane, de zirconium, de hafnium, de vanadium, de niobium, de tantaie, de tungstène, de rhénium, de bore et/ou de silicium.

14. Procédé selon la revendication 13 *caractérisé par* l'application comme composé de métal d'un oxyde métallique qui est réduit *in situ* par aluminothermie.

15. Procédé selon la revendication 2 *caractérisé par* l'utilisation de molybdène, de chrome, de niobium, de tungstène ou de tantale comme composant approprié de l'alliage.

16. Procédé selon au moins l'une des revendications 2 à 15 *caractérisé par* l'application complémentaire de fondants sur la surface de la partie première.

17. Procédé selon au moins l'une des revendications 2 à 16 *caractérisé en ce que* une suspension aqueuse d'un hydrure métallique est appliquée sur la partie première qui est ensuite chauffée jusqu'à 900° ou 1000° C dans une atmosphère réduite ans azote.

18. Procédé selon au moins l'une des revendications 1 à 17 *caractérisé par* l'application, en vue de la formation de siliciures, sur la partie première d'une solution aqueuse contenant, outre de l'hydrure de métal, du silicium ou de l'oxyde de silicium, ladite partie première étant ensuite chauffée jusqu'à 1000° ou 1100° C dans une atmosphère réduite sans azote et sans halogène.

19. Procédé selon au moins l'une des revendications 1 à 17 *caractérisé en ce que* après introduction du métal supplémentaire y compris du titane et/ou du zircon, la partie première est chauffée, avec de la poudre de silicium, à 1000° ou 1100° C dans un vide technique, en vue de la formation de siliciures.

20. Procédé selon l'une des revendications 1 à 17 *caractérisé en ce que* en vue de la formation de nitrure, la partie première sur la surface de laquelle a été appliqué un métal (supplémentaire), est chauffée dans une atmosphère à basse pression contenant de l'azote et/ou de l'ammoniac.

21. Procédé selon l'une des revendications 1 à 14 *caractérisé en ce que* après introduction du titane, la partie première est chauffée dans de la poudre de graphite.

22. Procédé selon au moins l'une des revendications 1 à 21 *caractérisé en ce que* la partie première ou le partie seconde fabriquée comme poinçon dans un alliage sans or, présente un coefficient d'expansion plus élevé que l'alliage de la matrice.

23. Procédé selon la revendication 1 caractérisé en ce que la masse d'encastrement réfractaire pour l'élément correspondant au chicot et adjacent à la partie première, est rendu conductrice thermiquement.

24. Procédé selon la revendication 23 *caractérisé par* l'adjonction de granulés de chrome ou de tungstène à la masse d'encastrement jusqu'à 50% du poids de cette dernière.

25. Verrou à glissière pour prothèses dentaires en un alliage sans or *caractérisé en ce que* la seule zone de surface de la partie première en alliage sans or contient du titane, de l'aluminium, du zirconium, du hafnium, du niobium, du vanadium, du tantale, du tungstène et/ou du rhénium.
